# EUROPEAN PATENT APPLICATION

(11) **EP 4 491 301 A1**
(43) Date of publication of application: **15.01.2025**
(21) Application number: 23185650.1
(22) Date of filing: 14.07.2023
(51) Int. Cl.: B22F 1/16, B01J 23/00, B01J 23/83, B01J 37/03, B01J 37/18, B22F 9/26, C22C 1/04, C22C 33/02, C25B 3/26, C25B 11/069, C25B 11/089, C25B 1/23, C25B 9/23, C25B 11/071, C25B 11/077, B01J 35/33

(54) **ENCAPSULATED ALLOY CATALYSTS AND THEIR METHODS OF PREPARATION**

(71) Applicant: Ecole Polytechnique Fédérale de Lausanne (EPFL), 1015 Lausanne (CH)
(72) Inventor: MA, Wenchao, 1015 Lausanne (CH); HU, Xile, 1015 Lausanne (CH)
(74) Representative: Schulz Junghans Patentanwälte PartGmbB

(57) **Abstract**

1. The present invention relates to a method for preparing a catalyst comprising the steps of
a. dissolving two or more alloy metal salts,
b. adding at least one chelating agent and at least one stabilising agent, forming a sol,
c. adding an encapsulant to said sol,
d. evaporating said sol, forming a gel,
e. drying said gel in the presence of oxygen, forming a powder,
f. reducing said powder, forming a catalyst.

The invention further relates to a catalyst, characterised in that the catalyst is stable for at least 200 h at a current density of 1.0 A/cm².

The invention further relates to catalyst comprising two or more metal alloys, wherein the two or more metal alloys are encapsulated by a metal oxide.

## Description

### Background

Converting carbon dioxide into carbon-based feedstocks and fuels using renewable electricity is an important pathway towards a net-zero-emission society. The predominant approach in CO₂ electroreduction is currently low temperature CO₂ electrolysis below 100 °C, which proved to be of little efficiency. Additionally, the carbonate formation caused by the reaction of CO₂ with hydroxide has been shown to plump the energy and carbon efficiency into inefficiently low values. High-temperature CO₂ electroreduction (600 ~ 1,000 °C) in a solid oxide electrolysis cell (SOEC) becomes attractive because it not only avoids the carbonate problem, but also exhibits an enhanced energy efficiency. However, current CO₂ SOEC catalysts suffer from a low system-level energy efficiency and lifetime at industrial relevant current densities. Previously reported catalysts consist of pure metals, simple mixtures of metals and oxides or a composite of oxide support and metal decoration. Such catalysts are prone to undergo severe particle agglomeration and coke formation at high temperatures, thus limiting their activity and stability.

Wang et al. (1) disclosed a composite catalyst consisting of NiFe alloy and La(Sr)Fe(Mn)O₃ oxide for high-temperature CO₂ electroreduction to CO. This composite catalyst is a simple mixture of alloy and oxide. The disclosed catalyst, however, has a stability of 100 h at 0.5 A/cm², rendering it not suitable for use at industrial relevant current densities.

The patent application CN 109860626 A (2) discloses a composite catalyst of FeNi alloy and La₂₋₂ₓB₂ₓM_{2y}Fe_{1-2y}O_{4-δ} oxide, where B is selected from least one of Ca, Ba, Sr, Pb and Bi, and M is selected from least one of Al, Cr, Mn, Ni, Zr, Ti and Y, for high-temperature CO₂ electroreduction to CO. This composite catalyst is an oxide-supported alloy catalyst. The catalyst, however, only has a limited energy efficiency of 61% at 0.6 A/cm².

Lv et al. (3) discloses a RuFe alloy catalyst for high-temperature CO₂ electroreduction to CO. The catalyst comprises precious metals and is further prepared on a Sr₂Fe_{1.4}Ru_{0.1}Mo_{0.5}O_{6-δ} perovskite surface. Such a catalyst is delimited in its energy efficiency to under 70% and its stability at high current densities.

Zhou et al. (4) discloses a Fe-decorated Sm-doped CeO₂ catalyst for high-temperature CO₂ electroreduction to CO. This composite catalyst is an oxide-supported single metal catalyst. Such a catalyst results in a low activity and stability of the catalyst, as well a limitation in its energy efficiency at high current densities.

The patent US 9,306,221 B2 (5) discloses a composite catalyst consisting of Al₂O₃ or MgO-supported metal mixed with SDC/GDC. However, the catalyst is targeted at for use in high-temperature fuel cells which has different requirements on the catalyst than high-temperature CO₂ electroreduction, since the ladder requires high cell voltages and is prone to coke formation. The catalyst disclosed in US 9,306,221 B2, however is mixed with SDC/GDC. Additionally, aluminium and magnesium oxides have insulating properties themselves, even at higher temperatures. Thus this combination yields a catalyst, with very low conductivity and low activity and further being prone to particle agglomeration and coke formation at high temperatures. The catalyst claimed in US 9,306,221 B2 is further prepared using a solid-phase method which uses a high-speed rotary mixer. This method comes with the limitation of yielding inhomogeneous product and requiring significant energy.

Based on the above-mentioned state of the art, the objective of the present invention is to provide means and methods to the preparation of encapsulated alloy catalysts for use in high temperature CO₂ electroreduction with high efficiency and stability. This objective is attained by the subject-matter of the independent claims of the present specification, with further advantageous embodiments described in the dependent claims, examples, figures and general description of this specification.

### Summary of the Invention

A first aspect of the invention relates to a method for preparing a catalyst comprising the steps of
a. dissolving two or more alloy metal salts,
b. adding at least one chelating agent and at least one stabilising agent, forming a sol,
c. adding an encapsulant to said sol,
d. evaporating said sol, forming a gel,
e. drying said gel in the presence of oxygen, forming a powder,
f. reducing said powder, forming a catalyst.

A second aspect of the invention relates to a catalyst comprising two or more metal alloys, wherein the two or more metal alloys are encapsulated by a metal oxide.

A third aspect of the invention relates to a catalyst obtained by the method according to the first aspect of the invention, wherein the catalyst is characterized in that the catalyst is stable for at least 200 h at a current density of 1.0 A/cm².

### Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a", "or" and "the" include plural referents unless the context clearly dictates otherwise.

"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

The term *non-precious metal* in the context of the present specification relates to any metallic element that does not possess significant value or rarity in the context of financial or industrial applications. Examples for non-precious metals include but are not limited to Mn, Fe, Co, Ni, Cu, Zn, Mo, In and Sn.

The term *alloy* in the context of the present specification relates to a mixture of chemical elements of which at least one is a metal, particularly of which at least two are a metal. The formed alloy retains the properties of the metal(s), particularly, the formed alloy retains the metals' conductivity.

The term *chelating agent* in the context of the present specification relates to a ligand with the ability to bind metal ions via a coordinative bond forming a chelate complex with high stability. Examples for chelating agents include but are not limited to citric acid, ethylenediaminetetraacetic acid, ascorbic acid. The effect of chelating metal ions in water is to enhance solubility.

The term *stabilising agent* in the context of the present specification relates to a solvent with the ability to control the gelation process and stabilize the resulting gel. Examples for stabilising agents include but are not limited to ethylene glycol, ethanol and propanol. The effect of stabilising gel is to prevent its rapid formation and thus limit the resulting catalyst particle sizes.

The term *encapsulant* in the context of the present specification relates to a material or substance used to enclose or encapsulate another material or component, providing protection, insulation, or other desired properties. The encapsulant is chosen out of a selection of metal salts, wherein the metal has a redox potential that is high enough to not be reduced by the reduction agent, such as hydrogen or carbon monoxide, which is sufficient to reduce the metal alloy oxides, .

The term *encapsulating* in the context of the present specification relates to a partial enclosure of a material, particularly alloy metal salts or metal alloys, by an encapsulant, particularly a metal oxide or doped metal oxide, wherein the partial enclosure takes place in such way that the encapsulant covers the alloy metal salts while still leaving gaps to allow access to the alloy metal salts for the reducing agent.

### Detailed Description of the Invention

A first aspect of the invention relates to a method for preparing a catalyst comprising the steps of
a. dissolving two or more alloy metal salts,
b. adding at least one chelating agent and at least one stabilising agent, forming a sol,
c. adding an encapsulant to said sol,
d. evaporating said sol, forming a gel,
e. drying said gel in the presence of oxygen, forming a powder,
f. reducing said powder, forming a catalyst.

The alloy metal salts are dissolved and at least one chelating agent and at least one stabilising agent are added to form a sol, wherein the chelating agent and stabilising agent enhance the dispersion of the dissolved metal salts by enhancing their solubility and create a higher surface tension in the solution. During the evaporation of the sol forming a gel, the encapsulant forms an encapsulating oxide structure and the alloy metal salts are converted to their respective oxides. Through drying the gel a powder is formed which comprises oxide encapsulated alloy metal oxides, wherein the encapsulation is partial allowing the reducing agent to access the alloy metal oxides in reduction. During the reduction of the powder the metals of the alloy metal oxides are reduced and a metal alloy is formed inside the encapsulation yielding a metal oxide encapsulated alloy catalyst.

In certain embodiments, the metals of the two or more alloy metal salts are each a non-precious metal.

In certain embodiments, the metals of the two or more alloy metal salts are selected from the group consisting of Mn, Fe, Co, Ni, Cu, Zn, Mo, In, and Sn.

In certain embodiments, the metals of the two or more alloy metal salts are selected from the group consisting of Co, Ni, In, and Zn.

In certain embodiments, the two or more alloy metal salts are metal nitrates or metal chlorides.

In certain embodiments the two or more alloy metal salts are metal nitrates.

In certain embodiments, the two or more alloy metal salts are dissolved in water.

In certain embodiments, the two or more alloy metal salts are dissolved at 80 to 200 °C.

In certain embodiments, the two or more alloy metal salts are dissolved at 100 to 200 °C.

In certain embodiments, the at least one chelating agent is a carboxylic acid.

In certain embodiments, the at least one chelating agent is selected from the group consisting of citric acid, ethylenediaminetetraacetic acid and ascorbic acid.

In certain embodiments, the at least one stabilising agent is an alcohol.

In certain embodiments, the at least one stabilising agent is selected from the group consisting of ethylene glycol, ethanol and propanol.

In certain embodiments, one chelating agent and one stabilising agent are added, forming a sol.

In certain embodiments, citric acid and ethylene glycol are added, forming a sol.

In certain embodiments, an encapsulant is added to said sol.

The encapsulant is chosen out of a selection of metal salts, wherein the metal has a redox potential high enough to not be reduced by hydrogen or carbon monoxide.

In certain embodiments, the encapsulant is a cerium (IV) salt or zirconium (IV) salt.

In certain embodiments, the cerium (IV) salt or zirconium (IV) salt is cerium (IV) nitrate or zirconium (IV) nitrate.

In certain embodiments, the encapsulant is a cerium (IV) salt.

Cerium has a higher conductivity.

In certain embodiments, the cerium (IV) salt is cerium (IV) nitrate.

In certain embodiments, a doping agent is added to the sol.

The doping agent is chosen out of a selection of metal salts, wherein the metal has a redox potential high enough to not be reduced by hydrogen or carbon monoxide.

In certain embodiment, the doping agent is a samarium (III) salt or gadolinium (III) salt.

The introduction of a doping agent increases the oxygen defects of the encapsulant, resulting in enhanced oxygen-ion conductivity and catalytic activity.

In certain embodiments, the doping agent is samarium (III) nitrate or gadolinium (III) nitrate.

In certain embodiments, the method comprises forming a metal oxide, particularly forming a doped metal oxide.

The doped metal oxide is formed between the encapsulant and the doping agent.

In certain embodiments, the doped metal oxide is Sm₂O₃-doped-CeO₂ (SDC) and Gd₂O₃-doped-CeOz (GDC).

In certain embodiments, the sol is evaporated, yielding a gel.

In certain embodiment, the sol is evaporated at 100°C.

The water is evaporated from the sol, yielding a gel.

In certain embodiments, the gel is dried in the presence of oxygen, yielding a powder.

During the heat treatment in the drying process, the alloy metal salts, particularly the metal nitrates are converted into their respective alloy metal oxides. The encapsulant containing cerium (IV) nitrate or zirconium (IV) nitrate, or the doped encapsulant containing cerium (IV) nitrate or zirconium (IV) nitrate doped with samarium (III) nitrate or gadolinium (III) is converted into the metal oxide, cerium (IV) oxide or zirconium (IV) oxide, or the doped metal oxide Sm₂O₃-doped-CeO₂ (SDC) or Gd₂O₃-doped-CeO₂ (GDC). The powder comprises the alloy metal oxides encapsulated by a metal oxide or doped metal oxide.

In certain embodiments, the gel is dried at 600°C upon air exposure.

In certain embodiments, the powder is reduced forming an alloy.

The metals of the alloy metal oxides are reduced in this step forming a metal alloy, while the oxidation state of the metal of the metal oxide or the metals of the doped metal oxides, surrounding the metal alloy, are maintained.

Compared to single metal catalysts, alloy based catalysts have richer active sites and suppressed surface reconstruction, thus exhibiting a higher activity and stability.

In certain embodiments, the powder is reduced using hydrogen or carbon monoxide.

Through using hydrogen or carbon monoxide, only the metals of the alloy metal salts are reduced, while the redox potential of the metals of the metal oxides or doped metal oxides, e.g. Ce, Zr, Sm or Gd, is too high for a reduction with hydrogen or carbon monoxide.

In certain embodiments, the powder is reduced using hydrogen.

In certain embodiments, the molar ratio of alloy to the doped encapsulant is 1:20 to 10:1.

In certain embodiments, the molar ratio of alloy to the doped encapsulant is 1:9 to 9:1.

In certain embodiments, the molar ratio of alloy to the doped encapsulant is 1:1 to 6:1.

In certain embodiments, the weight percentage of each metal in the alloy is at least 2 wt%.

In certain embodiments, the weight percentage of each metal in the alloy is at least 20 wt%.

In certain embodiments, the weight percentage of each metal in the alloy is at least 30 wt%.

In certain embodiments, the ratio of alloy to encapsulant is 5 wt%:95 wt% to 95 wt%:5 wt%.

The encapsulant refers to the metal oxide or doped metal oxide, particularly the doped metal oxide.

In certain embodiments, the ratio of alloy to encapsulant is 20 wt%:80 wt% to 80 wt%:20 wt%.

In certain embodiments, the ratio of alloy to encapsulant is 30 wt%:70 wt% to 60 wt%: 40 wt%.

In certain embodiments, the ratio of alloy to encapsulant is 50 wt%:50 wt% to 60 wt%:40 wt%.

A second aspect of the invention relates to a catalyst comprising two or more metal alloys, wherein the two or more metal alloys are encapsulated by a metal oxide.

High-temperature CO₂ electroreduction in a solid oxide electrolysis cell (SOEC) using the claimed catalyst avoids the particle agglomeration and the formation of coke, while at the same time exhibiting an enhanced energy efficiency.

In certain embodiments, the weight percentage of the two or more metal alloys in the catalyst is higher than 20 wt%.

In certain embodiment the catalyst the catalyst comprises two or more metal alloys, wherein the two or more metal alloys are encapsulated by a metal oxide and wherein the weight percentage of the two metal alloys in the catalyst is higher than 30 wt%.

In certain embodiment the catalyst the catalyst comprises two or more metal alloys, wherein the two or more metal alloys are encapsulated by a metal oxide and wherein the weight percentage of the two metal alloys in the catalyst is higher than 40 wt%.

In certain embodiment the catalyst the catalyst comprises two or more metal alloys, wherein the two or more metal alloys are encapsulated by a metal oxide and wherein the weight percentage of the two metal alloys is higher than 50 wt%.

In certain embodiment the catalyst the catalyst comprises two metal alloys, wherein the two metal alloys are encapsulated by a metal oxide and wherein the weight percentage of the two metal alloys is higher than 20 wt%.

In certain embodiment the catalyst the catalyst comprises two metal alloys, wherein the two metal alloys are encapsulated by a metal oxide and wherein the weight percentage of the two metal alloys is higher than 30 wt%.

The catalyst shows a significantly higher current density at different electric potential. The catalyst further reaches an energy efficiency higher than 75% at 1.0 A/cm² and up to 90% at an industrial relevant current density of 1.0 A/cm² for CO₂ electroreduction.

In certain embodiments, metals of the metal alloys are non-precious metals.

In certain embodiments, the metals of the metal alloys are selected from the group consisting of Mn, Fe, Co, Ni, Cu, Zn, Mo, In and Sn.

In certain embodiments, the metals of the metal alloys are selected from the group consisting of Co and Ni.

In certain embodiments, the metal oxide is cerium (IV) oxide or zirconium (IV) oxide.

In certain embodiments, the metal oxide is cerium (IV) oxide or zirconium (IV) oxide.

In certain embodiments, the metal oxide is a doped metal oxide.

In certain embodiments, the doped metal oxide is Sm₂O₃-doped-CeO₂ (SDC) or Gd₂O₃-doped-CeO₂ (GDC).

A third aspect of the invention relates to a catalyst obtained by the method according to the first aspect of the invention, wherein the catalyst is characterized in that the catalyst is stable for at least 200 h at a current density of 1.0 A/cm².

In certain embodiments, the catalyst is characterized in that the catalyst is stable for at least 1000 h at a current density of 1.0 A/cm².

The catalyst has a higher stability at high current densities and can thus be used for example as catalyst for high temperature CO₂ electroreduction in a solid oxide electrolysis cell (SOEC).

In certain embodiments, the catalyst has an energy efficiency higher than 75% at 1.0 A/cm².

When used in high temperature CO₂ electroreduction, the catalyst provides an increased energy efficiency within this process allowing for more efficient carbon recycling and energy storage, even in industrial relevant settings.

The invention is further illustrated by the following examples and figures, from which further embodiments and advantages can be drawn. These examples are meant to illustrate the invention but not to limit its scope.

### Description of the Figures

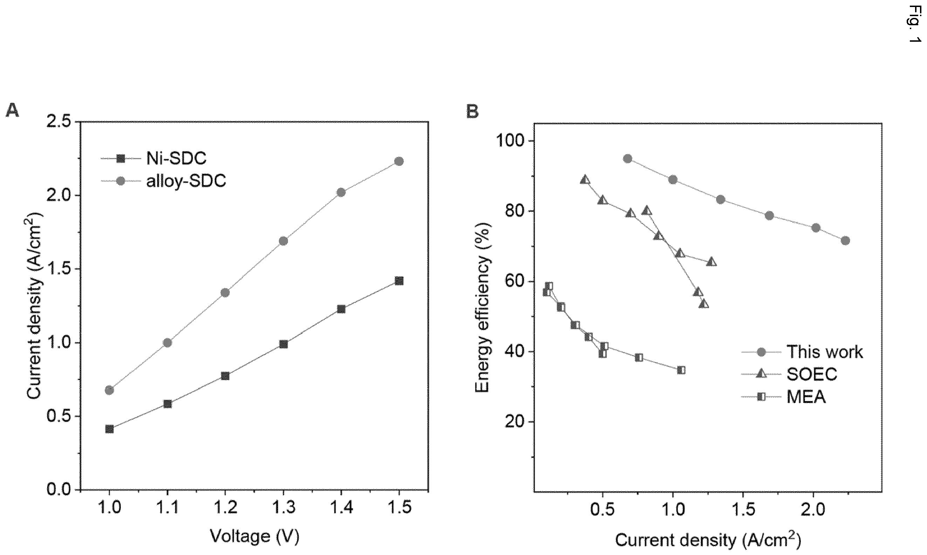

- Fig. 1: shows the performance of Ni-SDC (as reference) and a typical alloy-SDC catalyst for CO₂ electroreduction at 800 °C. The alloy-SDC showed significantly higher current densities than Ni-SDC at all investigated cell voltages (Fig. 1A). The energy efficiency of our encapsulated alloy-SDC catalyst reaches 90% at an industrial relevant current density of 1 A/cm², much higher than state-of-the-art SOEC and membrane electrode assembly (MEA) systems for CO₂ electroreduction to CO (Fig. 1B)

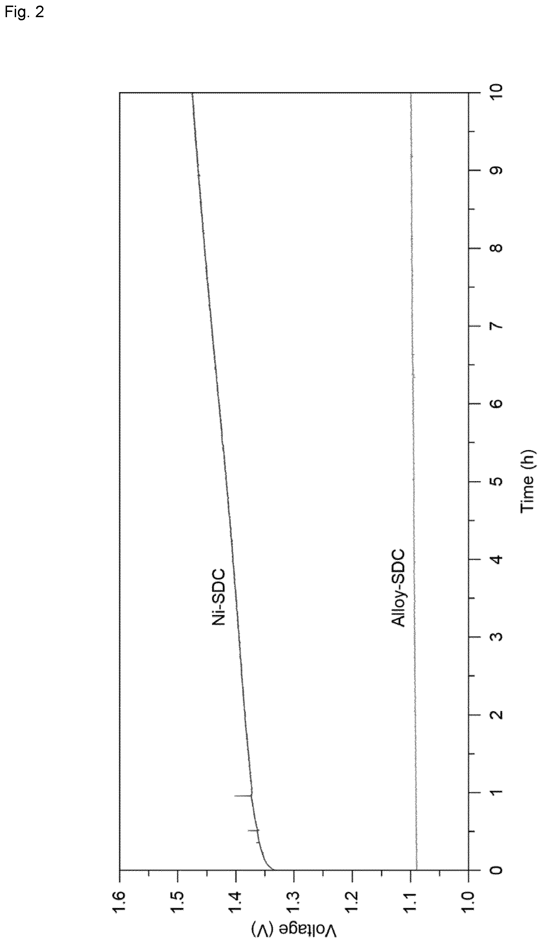

- Fig. 2: shows the stability tests of Ni-SDC and a typical alloy-SDC catalyst at a current density of 1 A/cm². The cell voltage increased from 1.33 V to 1.48 V after 10 hours of operation over the Ni-SDC catalyst. On the other hand, the cell voltage only increased from 1.09 V to 1.10 V during 10 hours of operation over the alloy-SDC catalyst. This suggests a robust stability of our encapsulated alloy catalyst.

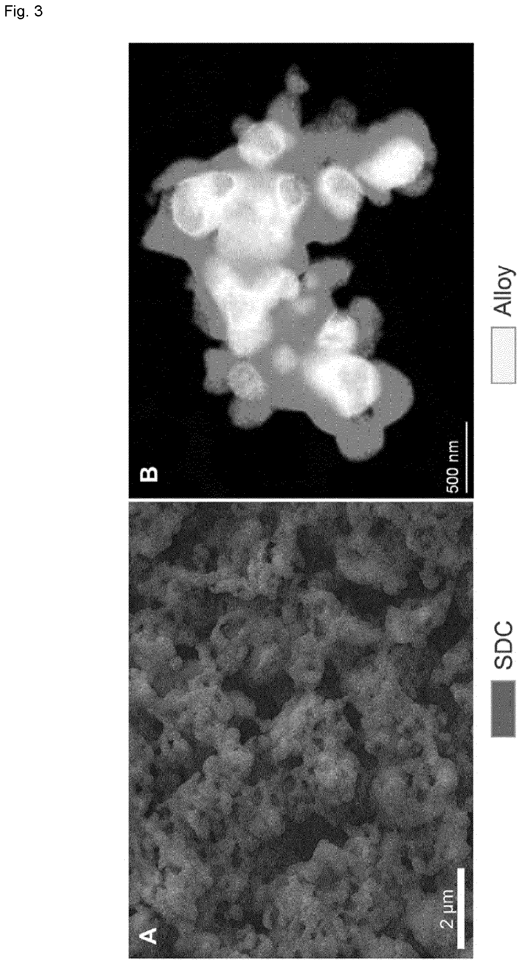

- Fig. 3: shows the energy-dispersive X-ray spectroscopy (EDX) mappings of a typical alloy-SDC catalyst. Alloy forms the frame and SDC decorated onto the frame in the form of particles.

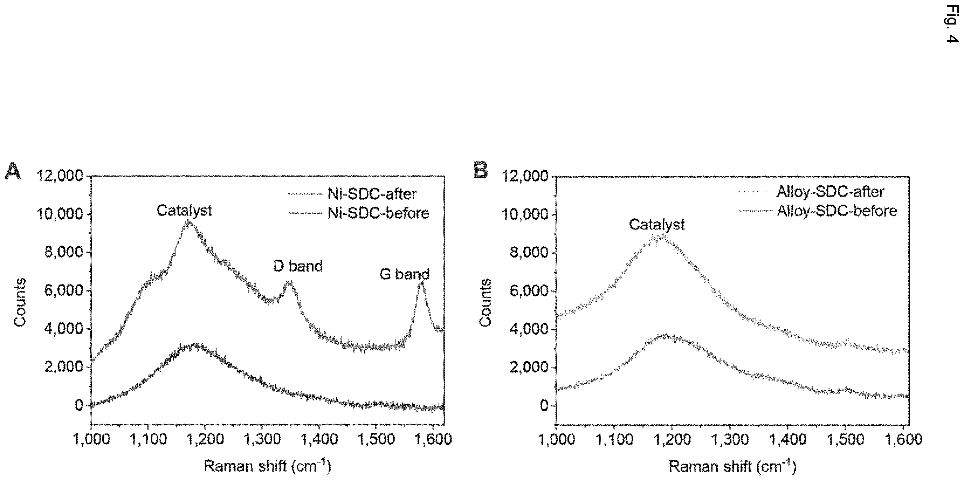

- Fig. 4: shows the Raman spectra of Ni-SDC and a typical alloy-SDC catalyst before and after stability tests. After stability test, two new bands were observed over the Ni-SDC surfaces: a band attributed to D carbon at 1349 cm⁻¹, and G carbon at 1580 cm⁻¹ (Fig. 4A). The broad catalyst band between 1050 and 1200 cm⁻¹ also changed a lot over Ni-SDC probably due to the surface reconstruction (Fig. 4A). These results indicate the formation of coke and surface restructure for the Ni catalyst. On the contrary, no coke formation or surface reconstruction was observed over the typical alloy-SDC catalyst after stability test (Fig. 4B).

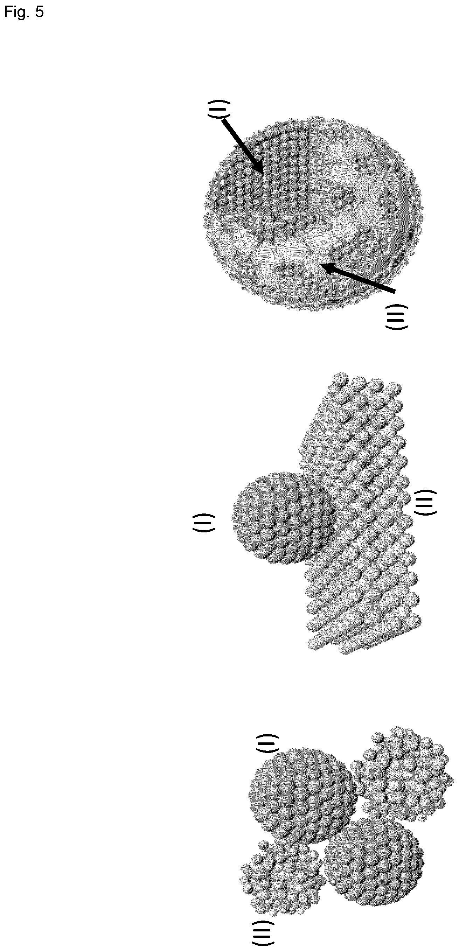

- Fig. 5: shows a simple mixture of metal and oxide (left), an oxide-supported metal (middle) and an alloy encapsulated by oxide (right). In case of the mixture of metal an oxide, (I) represents the metal and (II) represents the oxide. In case of the oxide-supported metal, (II) represents the oxide support and (I) represents the metal decoration. In case of the alloy encapsulated by oxide, the oxide (II) partially encapsulated the alloy (I), while still leaving gaps in the capsule.

### Examples

### Example 1: Preparation of encapsulated Fe-Co alloy by GDC

Firstly, 20 mmol of Fe(NO₃)₂·9H₂O and 10 mmol of Co(NO₃)₃·6H₂O were dissolved in 50 ml of H₂O at 120 °C under vigorous stirring. 100 mmol of ethylenediaminetetraacetic acid and 100 mmol ethanol were then added to the solution to form a sol. Subsequently, 16 mmol of Ce(NO₃)₃·6H₂O and 4 mmol of Gd(NO₃)₃·6H₂O were added. The reaction was kept at 120 °C for about 3 h to evaporate H₂O from the system. The remaining solvent was removed at 300 °C overnight in an oven, followed by heat treatment in air at 600 °C for 5 h with a ramping rate of 5 °C/min. Finally, the powders were reduced at hydrogen atmosphere at 800 °C for 10 min to obtain the encapsulated Fe-Co alloy by GDC. The resulting catalyst has an Fe-Co alloy content of 33 wt%.

### Example 2: Preparation of encapsulated Ni-In alloy by Sm₂O₃-doped-ZrO₂ (SDZ)

Firstly, 27 mmol of Ni(NO₃)₂·6H₂O and 3 mmol of In(NO₃)₃·H₂O were dissolved in 50 ml of H₂O at 150 °C under vigorous stirring. 90 mmol of ascorbic acid and 90 mmol propanol were then added to the solution to form a sol. Subsequently, 12 mmol of Zr(NO₃)₃·5H₂O and 3 mmol of Sm(NO₃)₃·6H₂O were added. The reaction was kept at 150 °C for about 3 h to evaporate H₂O from the system. The remaining solvent was removed at 300 °C overnight in an oven, followed by heat treatment in air at 600 °C for 5 h with a ramping rate of 5 °C/min. Finally, the powders were reduced at hydrogen atmosphere at 800 °C for 10 min to obtain the encapsulated Ni-In alloy by SDZ. The resulting catalyst has an Ni-In alloy content of 49 wt%.

### Example 3: Preparation of encapsulated Co-Ni alloy by SDC

Firstly, 20 mmol of Co(NO₃)₂·6H₂O and 20 mmol of Ni(NO₃)₃·6H₂O were dissolved in 50 ml of H₂O at 100 °C under vigorous stirring. 100 mmol of citric acid and 100 mmol ethylene glycol were then added to the solution to form a sol. Subsequently, 8 mmol of Ce(NO₃)₃·6H₂O and 2 mmol of Sm(NO₃)₃·6H₂O were added. The reaction was kept at 100 °C for about 3 h to evaporate H₂O from the system. The remaining solvent was removed at 300 °C overnight in an oven, followed by heat treatment in air at 600 °C for 5 h with a ramping rate of 5 °C/min. Finally, the powders were reduced at hydrogen atmosphere at 800 °C for 10 min to obtain the encapsulated Co-Ni alloy by SDC. The resulting catalyst has a Co-Ni alloy content of 58 wt%.

### Example 4: Preparation of encapsulated Fe-Ni-Zn alloy by GDC

Firstly, 20 mmol of Fe(NO₃)₂·9H₂O, 20 mmol of Ni(NO₃)₂·6H₂O and 5 mmol of Zn(NO₃)₃·6H₂O were dissolved in 60 ml of H₂O at 200 °C under vigorous stirring. 110 mmol of citric acid and 110 mmol ethylene glycol were then added to the solution to form a sol. Subsequently, 8 mmol of Ce(NO₃)₃·6H₂O and 2 mmol of Gd(NO₃)₃·6H₂O were added. The reaction was kept at 200 °C for about 3 h to evaporate H₂O from the system. The remaining solvent was removed at 300 °C overnight in an oven, followed by heat treatment in air at 600 °C for 5 h with a ramping rate of 5 °C/min. Finally, the powders were reduced at hydrogen atmosphere at 800 °C for 10 min to obtain the encapsulated Fe-Ni-Zn alloy by GDC. The resulting catalyst has an Fe-Ni-Zn alloy content of 60 wt%.

### Example 5: High-temperature CO₂ electroreduction

To test the catalyst performance, the encapsulated alloy catalysts were used as the cathode. La_{0.8}Sr_{0.2}Ga_{0.2}Mg_{0.2}O_{3-δ}, La_{0.6}Sr_{0.4}Co_{0.2}Fe_{0.8}O_{3-δ}, and SDC were used as electrolyte, anode, and buffer layer, respectively. All electrochemical measurements were conducted using a SOEC setup and were controlled by a potentiostat. The cell was heated to the targeted reaction temperature with a ramping rate of 5 °C/min under air. Next, a 20 vol% H₂ diluted by N₂ was fed to cathode compartment to reduce the catalyst for 10 min. Once the reduction process was complete, pure CO₂ and air were fed to the cathode and anode compartments, respectively.

At a reaction temperature of 800 °C, the encapsulated Fe-Co alloy by GDC (in example 1), In-Ni alloy by SDZ (in example 2), Co-Ni alloy by SDC (in example 3), Fe-Ni-Zn alloy by GDC (in example 4) catalysts gave an energy efficiency of 75%, 80%, 90%, and 85%, respectively, at a current density of 1 A/cm². All these catalysts are stable for at least 200 h at a current density of 1.0 A/cm².

### Comparison of catalytic performance

Figure 1A shows that, for high-temperature CO₂ electroreduction, the encapsulated alloy catalyst has significantly higher current densities than single Ni catalyst at all investigated cell voltages. This reveals the promoting effect of alloy in CO₂ electroreduction compared to single metal.

Figure 1B shows that, the energy efficiencies of our encapsulated alloy-SDC catalyst are much higher than state-of-the-art SOEC and membrane electrode assembly (MEA) systems for CO₂ electroreduction to CO at all investigated current densities. Typically, the energy efficiency of the encapsulated Co-Ni catalyst reaches 90% at an industrial relevant current density of 1 A/cm², which is below 70% and 35% for state-of-the-art SOECs and MEAs, respectively.

The encapsulated alloy catalyst of the present invention can maintain a stable operation for at least 1000 h at a current density of 1.0 A/cm², which is below 200 h and 100 h for state-of-the-art SOECs and MEAs, respectively.

### Cited prior art documents:

[1] Wang, S., Tsuruta, H., Asanuma, M. and Ishihara, T. Ni-Fe-La(Sr)Fe(Mn)O3 as a new active cermet cathode for intermediate-temperature CO2 electrolysis using a LaGaO3-based electrolyte [J]. Advanced Energy Materials, 5, 1401003 (2015).
[2] Yang, W., Hu, S., and Zhu, X. RP structured oxide loaded with iron-nickel alloy nanoparticles and preparation and application thereof. China Patent CN 109860626A [P]. 2017-11-30.
[3] Lv, H. et al. Promoting exsolution of RuFe alloy nanoparticles on Sr2Fe1.4Ru0.1Mo0.5O6-δ via repeated redox manipulations for CO2 electrolysis [J]. Nature Communications, 12, 5665 (2021).
[4] Zhou, Y., Wei, F. and Wu, H. Fe-decorated on Sm-doped CeO2 as cathodes for high-temperature CO2 electrolysis in solid oxide electrolysis cells [J]. Electrochimica Acta, 419, 140434 (2022).
[5] Fukasawa, T., Shimamura, K., Hanakata, Y., Yoshino, M., Matsunaga, K., Kameda, T. and Itoh, Y. Fuel electrodes for solid oxide electrochemical cell, processes for producing the same, and solid oxide electrochemical cells. U.S. Patent Application 12/204, 978 [P]. 2013-03-14.

All scientific publications and patent documents cited in the present specification are incorporated by reference herein.

## Claims

1. A method for preparing a catalyst comprising the steps of
a. dissolving two or more alloy metal salts,
b. adding at least one chelating agent and at least one stabilising agent, forming a sol,
c. adding an encapsulant to said sol,
d. evaporating said sol, forming a gel,
e. drying said gel in the presence of oxygen, forming a powder,
f. reducing said powder, forming a catalyst.

2. The method according to claim 1, wherein the metals of the two or more alloy metal salts are each a non-precious metal, particularly, wherein the metals of the two or more alloy metal salts are selected from the group consisting of Mn, Fe, Co, Ni, Cu, Zn, Mo, In and Sn, more particularly, wherein the metals of the two or more alloy metal salts are selected from the group consisting of Co, Ni, In, and Zn.

3. The method according to any of the preceding claims, wherein the at least one chelating agent is a carboxylic acid, particularly selected from the group consisting of citric acid, ethylenediaminetetraacetic acid and ascorbic acid, more particularly citric acid.

4. The method according to any of the preceding claims, wherein the at least one stabilizing agent is an alcohol, particularly selected from the group consisting of ethylene glycol, ethanol and propanol, more particularly ethylene glycol.

5. The method according to any of the preceding claims, wherein the encapsulant is a cerium (IV) salt or zirconium (IV) salt, particularly wherein the encapsulant is a cerium (IV) salt, more particularly wherein the encapsulant is cerium (IV) nitrate or zirconium (IV) nitrate, particularly wherein the encapsulant is cerium (IV) nitrate.

6. The method according to claim 1, wherein a doping agent is added to the sol, wherein in particular the doping agent is a samarium (III) salt or gadolinium (III) salt, wherein more particularly the doping agent is a samarium (III) nitrate or gadolinium (III) nitrate.

7. The method according to any of the preceding claims, wherein the powder is reduced with hydrogen or carbon monoxide, particularly wherein the powder is reduced with hydrogen.

8. The method according to any of the preceding claims, wherein the ratio of alloy to encapsulant is 5 wt%:95 wt% to 95 wt%:5 wt%, particularly wherein the ratio of alloy to encapsulantt is 20 wt%:80 wt% to 80 wt%:20 wt%, more particularly wherein the ratio of alloy to encapsulant is 30 wt%:70 wt% to 60 wt%: 40 wt%.

9. A catalyst comprising two or more metal alloys, wherein the two or more metal alloys are encapsulated by a metal oxide and wherein in particular the weight percentage of the two or more metal alloys in the catalyst is higher than 20 wt%, particularly wherein the two or more metal alloys are encapsulated by a metal oxide and wherein the weight percentage of the two or more metal alloys in the catalyst is higher than 30 wt% .

10. The catalyst according to claim 9, wherein metals of the metal alloys are non-precious metals, particularly wherein the metals of the metal alloys are selected from the group consisting of Mn, Fe, Co, Ni, Cu, Zn, Mo, In and Sn, particularly wherein the metals of the metal alloys are selected from the group consisting of Co and Ni.

11. The catalyst according to claims 9 and 10 wherein the metal oxide is cerium (IV) oxide or zirconium (IV) oxide, particularly cerium (IV) oxide.

12. The catalyst according to claims 9 to 11, wherein the metal oxide is a doped metal oxide.

13. The catalyst according to claim 12, wherein the doped metal oxide is Sm₂O₃-doped-CeOz (SDC) or Gd₂O₃-doped-CeO₂ (GDC).

14. A catalyst obtained by the method according to claims 1 to 8, wherein the catalyst is **characterized in that** the catalyst is stable for at least 200 h at a current density of 1.0 A/cm², particularly wherein the catalyst is **characterized in that** the catalyst is stable for at least 1000 h at a current density of 1.0 A/cm².
